# EUROPÄISCHE PATENTSCHRIFT

(11) **EP 0 428 865 B1**
(45) Veröffentlichungstag und Bekanntmachung des Hinweises auf die Patenterteilung: **30.03.1994**
(21) Anmeldenummer: 90119668.3
(22) Anmeldetag: 13.10.1990
(51) Int. Cl.: B60K 17/06, F16H 47/04

(54) **Antriebseinrichtung in einem Omnibus**
Arrangement of the power transmission in a bus
Aménagement de la transmission dans un omnibus

(30) Priorität: 16.11.1989 DE 3938080
(43) Veröffentlichungstag der Anmeldung: 29.05.1991
(73) Patentinhaber: MAN Nutzfahrzeuge Aktiengesellschaft, 80976 München (DE)
(72) Erfinder: Hagin, Faust, Dipl.-Ing., W-8000 München 2 (DE); Drewitz, Hans, Ing. (grad.), W-8000 München 40 (DE)

(56) Entgegenhaltungen:
- EP-A- 0 041 320
- DE-A- 2 904 572
- DE-A- 3 619 640

## Beschreibung

Die Erfindung betrifft eine Antriebseinrichtung in einem Omnibus mit Merkmalen entsprechend dem Oberbegriff des Anspruchs 1.

Eine solche Antriebseinrichtung ist aus der EP-A-0 041 320 bekannt. Dabei ist ein Antriebsaggregat vorgesehen, bei dem ein Antriebsmotor, Kupplung, Getriebe sowie ein Kühler-/Lüfter-Aggregat vor dem Antriebsmotor in einer Linie hintereinander angeordnet sind. Dieses Antriebsaggregat hat eine solche begrenzte Baulänge, daß es im Heck des Omnibus der Quere nach oder sich längs einer Seitenwand des Omnibus erstreckend einbaubar ist. Der zur Hinterachse führende Antriebsstrang verläuft außermittig und annähernd parallel zur Längsmittelachse des Omnibus und ist an der Abtriebswelle eines seitlich am Getriebe angeordneten Seitenabtriebes angeschlossen. Dabei ist die Abtriebswelle über einen Getriebezug mit einer Welle des Getriebes verbunden. Als Getriebe ist eine spezielle Art eines mechanischen Mehrgang-Schaltgetriebes vorgesehen.

Es ist daher Aufgabe der Erfindung, eine Antriebseinrichtung zu finden, die sowohl quer im Omnibus-Heck als auch längs einer Seitenwand hinter der Hinterachse einbaubar ist und hierfür so ausgestaltet ist, daß der zur Hinterachse führende Achsantriebsstrang für beide Anordnungsvarianten unmittelbar anschließbar ist.

Diese Aufgabe ist erfindungsgemäß durch eine Antriebseinrichtung mit den im Anspruch 1 angegebenen Merkmalen gelöst.

Die Erfindung besteht einerseits darin, aus der Vielzahl bekannter Getriebe ein solches auszuwählen, das die aufgabengemäßen Forderungen erfüllt und dieses dann zusammen mit dem Seitenabtrieb so zu gestalten, daß es im Verbund mit den anderen Organen des Antriebsaggregates sowohl einen Quer- als auch Längseinbau im Omnibusheck ermöglicht und der zur Hinterachse führende Achsantriebsstrang unabhängig von der Einbaulage des Antriebsaggregates unmittelbar am Seitenabtrieb anschließbar ist.

Gemäß der Erfindung wurde dabei ein dem Grundprinzip nach aus der DE-C-29 04 572 und einen Anwendungsfall nach aus der DE-A-3 619 640 bekanntes stufenloses hydrostatisch-mechanisches Leistungsverzweigungsgetriebe - sogenannt SHL-Getriebe - gewählt, da sich dessen Brauchbarkeit in einem Antriebsaggregat aus erprobten Antriebslösungen ergab. Dabei wurden Antriebseinrichtungen mit einem aus vorstehend genannten Schriften bekannten SHL-Getriebe in Omnibusse eingebaut, die derzeit unter der Bezeichnung "Hydrobus" in Verkehrsbetrieben verschiedener deutscher Städte im Rahmen von Feldversuchen zum Einsatz kommen. Das Problem bestand bisher jedoch darin, daß die bekannte Bauart des SHL-Getriebes zu lang baut, um in Linie mit einem Antriebsmotor, Kühler-/Lüfter-Aggregat und gegebenenfalls einer Kupplung und einem Schwungrad ein Antriebsaggregat zu bilden, das der Quere nach in einem Omnibus-Heck einbaubar wäre. Dabei ergibt sich dieses Problem aus dem konstruktiven Aufbau des bekannten SHL-Getriebes, weil dessen Ausgangswelle axial mit der leistungseinleitenden Eingangswelle fluchtet und an dieser Ausgangswelle der zur Hinterachse führende Achsantriebsstrang angekoppelt ist.

Dieses Problem wurde erfindungsgemäß durch konstruktive Umbaumaßnahmen innerhalb des ausgewählten SHL-Getriebe gelöst, wobei unter Verzicht auf die bisherige endseitige Anschlußstelle für den Achsantriebsstrang die Antriebskraft von der ausgangsseitigen Hauptwelle des SHL-Getriebes getriebeintern von hinten nach vorne nahe zum Eingangsbereich zurückgeführt und in einen speziellen Nebenabtrieb eingeleitet wird. Dieser wiederum umfaßt zwei synchron angetriebene Abtriebswellen, was es ermöglicht, daß der Achsantriebsstrang unabhängig davon, ob das Antriebsaggregat längs oder quer im Omnibus eingebaut wird, direkt an der einen oder anderen Abtriebswelle anschließbar ist.

Durch diese Maßnahmen ist es somit möglich, das SHL-Getriebe in Reihe mit den genannten anderen Aggregaten zusammenzubauen und ein hinsichtlich seiner Baulänge hinreichend kurzes Antriebsaggregat zu bekommen. Diese bislang noch nicht erreichte raumsparende Kompaktheit des Gesamt-Antriebsaggregates schafft im Heck des Omnibus nun die Möglichkeit, den für den Einbau des Gesamt-Antriebsaggregates nicht mehr benötigten Raum anderweitig zu nutzen, beispielsweise für eine Vergrößerung des Gepäck-Stauraumes, eine günstigere Anordnung der Bestuhlung oder eine vorteilhaftere Anordnung und Ausgestaltung des Hecktür-Eingangsbereiches.

Außerdem schafft die erfindungsgemäße Lösung dadurch, daß die vom Leistungsverzweigungsgetriebe abzugebende Leistung nicht direkt von dessen Ausgangs-Hauptwelle, sondern indirekt abgenommen und über einen Getriebezug zu einer Abtriebswelle eines seitlich am Planetendifferential angeordneten Seitenabtriebes transferiert und erst dort in den Achsantriebsstrang eingeleitet wird, die vorteilhafte Möglichkeit, die Ausgangs-Hauptwelle des Leistungsverzweigungsgetriebes als Hohlwelle auszubilden und die koaxial hierzu fluchtende Eingangs-Hauptwelle durch diese hindurch zu verlängern. Diese so verlängerte Eingangs-Hauptwelle bildet dann jene Welle, an dem ein Nebenaggregat, zum Beispiel eine Pumpe oder ein Triebstrang für den Antrieb von mehreren Nebenaggregaten anschließbar ist, was ebenfalls zu einer Platzersparnis aufgrund besonders günstiger Anordnung besagter Nebenaggregate führt.

Vorteilhafte Ausgestaltungen der erfindungsgemäßen Lösung sind in den Unteransprüchen angegeben.

Nachstehend ist die erfindungsgemäße Lösung anhand mehrerer in der Zeichnung dargestellter Ausführungsbeispiele noch näher erläutert. In der Zeichnung zeigen:
- Fig. 1: einen Querschnitt durch den Heckbereich eines Omnibus, mit einer ersten Art und Einbaulage eines bestimmten Gesamtantriebsaggregates,
- Fig. 2: eine schematische Darstellung des bei der Antriebseinrichtung gemäß Fig. 1 verwendeten Leistungsverzweigungsgetriebes mit entsprechendem Anschluß des Achsantriebsstranges,
- Fig. 3: einen Querschnitt durch den Heckbereich eines Omnibus mit einer alternativen Einbaulage des aus Fig. 1 ersichtlichen Gesamtantriebsaggregates,
- Fig. 4: das beim Antriebsaggregat gemäß Fig. 3 verwendete Leistungsverzweigungsgetriebe schematisiert in Verbindung mit dem Anschluß des Achsantriebsstranges,
- Fig. 5: einen Querschnitt durch den Heckbereich eines Omnibus mit Quereinbau eines gegenüber Fig. 1 und 3 anderen Gesamtantriebsaggregates,
- Fig. 6: einen Querschnitt durch den Heckbereich eines Omnibus mit Längseinbau eines gegenüber Fig. 1 und 3 anderen Gesamtantriebsaggregates,
- Fig. 7: eine detailliertere schematische Darstellung des in Fig. 5 und 6 gezeigten Gesamtantriebsaggregates, und
- Fig. 8: das Gesamtantriebsaggregates gemäß Fig. 7 mit einer anderen Art des Anschlusses von Nebenaggregaten.

In den Figuren sind gleiche bzw. einander entsprechende Bauteile mit gleichen Bezugszeichen angezogen.

In der Zeichnung sind als Teile eines Omnibus mit 101 dessen linke Seitenwand, mit 102 dessen rechte Seitenwand, mit 103 die Eingangstür in letzterer, mit 104 der zugehörige Eingangsbereich und mit 105 dessen Heckwand bezeichnet.

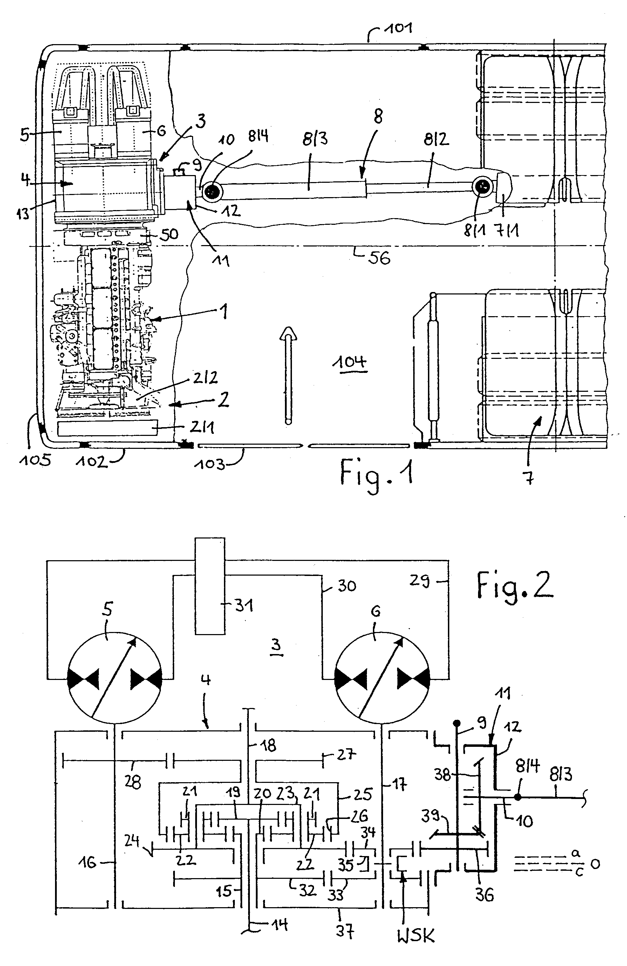

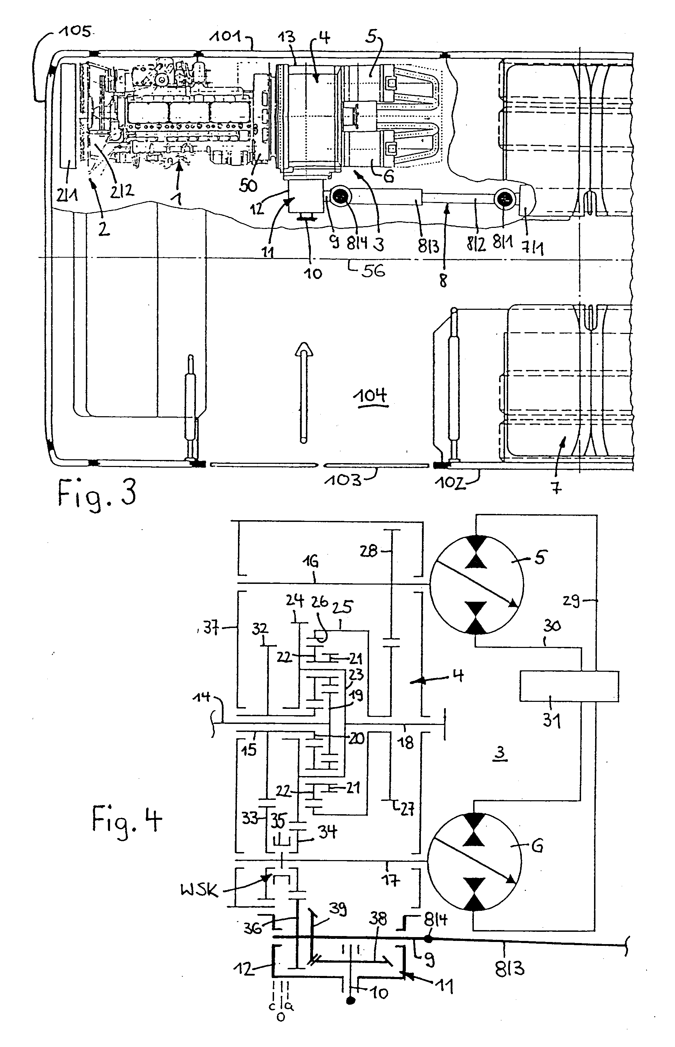

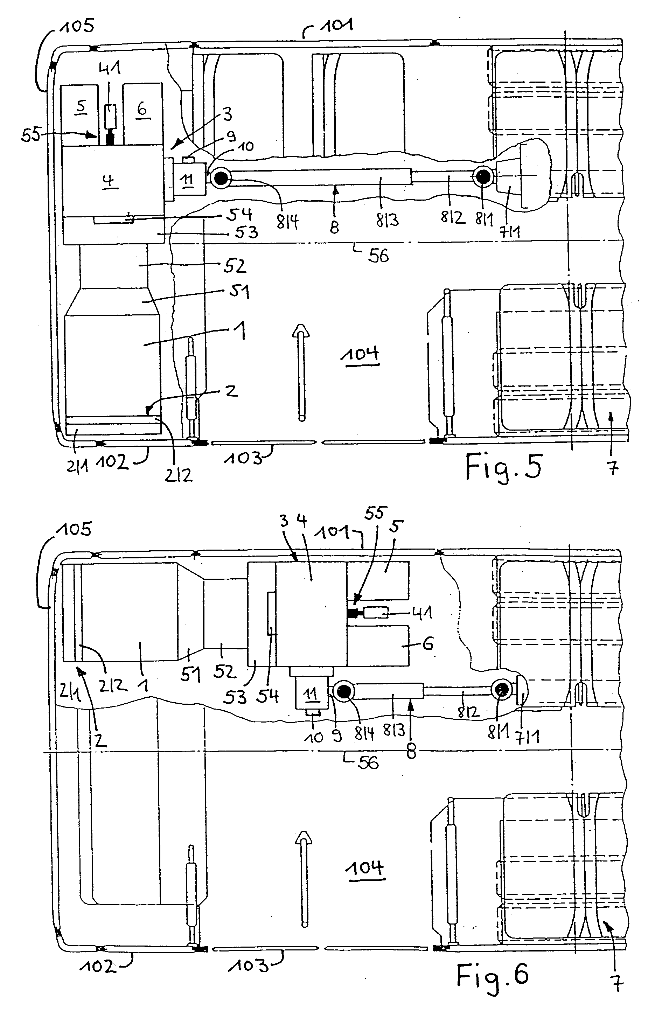

Die Antriebseinrichtung des Omnibus umfaßt verschiedene, je nach Ausführungsform mehr oder weniger Einzelaggregate, wobei mit 1 eine Brennkraftmaschine, mit 2 ein aus Kühler(n) 2/1 und Lüfter 2/2 bestehendes Kühler-Lüfter-Aggregat, mit 3 ein hydrostatisch-mechanisches Leistungsverzweigungsgetriebe, mit 4 dessen Planetendifferential und mit 5, 6 dessen beide Hydromaschinen, mit 50 ein Schwungrad mit Kupplung (Fig. 1, 3), mit 51 (Fig. 5 - 8) eine Kupplung, mit 52 (Fig. 5 - 8) eine als Motor oder Generator betreibbare Elektromaschine, mit 53 (Fig. 5 - 8) ein Energiespeicher-Schwungrad und mit 54 (Fig. 5 - 8) eine weitere Kupplung bezeichnet sind.

Entsprechend einem Charakteristikum der Erfindung sind die je nach Ausführungsform im Omnibus notwendigen Einzelaggregate in Linie hintereinander zu einem kompakten Gesamt-Antriebsaggregat zusammengebaut.

Im Fall der Ausführungsbeispiele gemäß Fig. 1 und 3 besteht dieses Gesamt-Antriebsaggregat aus einer Brennkraftmaschine 1, einem Kühler/LüfterAggregat 2, 2/1, 2/2, einem Schwungrad 50 mit Kupplung und einem hydrostatisch-mechanischen Leistungsverzweigungsgetriebe 3 mit einem wenigstens vierwelligen Planetendifferential 4 und zwei Hydromaschinen 5, 6. Dabei sind diese Einzelaggregate in der Reihenfolge 2, 1, 50, 3 (mit 4 und 5, 6 nebeneinander hinter 4) in Linie hintereinander und jeweils aneinander angrenzend zusammengebaut. Im Fall von Fig. 1 ist dieses Gesamt-Antriebsaggregat quer im Heck des Omnibus nahe der Heckwand 105 eingebaut. Im Fall von Fig. 3 dagegen ist dieses Gesamt-Antriebsaggregat längs im Heck des Omnibus nahe der linken Seitenwand 101 eingebaut. Es ist in beiden Fällen jedoch auch möglich, das Kühler/Lüfter-Aggregat 2 nicht in Linie mit den anderen genannten Aggregaten, sondern getrennt von diesen nahe bei der Brennkraftmaschine, z.B. neben dieser anzuordnen.

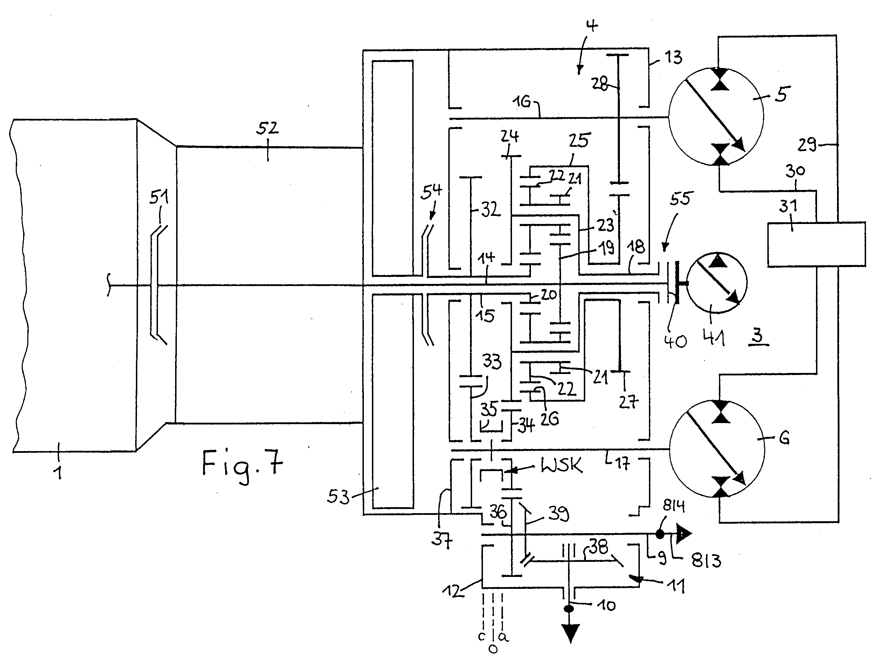

Im Fall der Ausführungsbeispiele gemäß Fig. 5 und 6 besteht das Gesamtantriebsaggregat aus einer Brennkraftmaschine 1 mit zugehörigem Kühler/Lüfter-Aggregat 2; 2/1, 2/2, einer schaltbaren Kupplung 51, einer als Motor oder Generator betreibbaren Elektromaschine 52, einem Schwungrad 53, einer weiteren schaltbaren Kupplung 54 und einem hydrostatischmechanischen Leistungsverzweigungsgetriebe 3 mit einem wenigstens vierwelligen Planetendifferential 4 und zwei Hydromaschinen 5, 6 sowie einer Nebenabtriebsstelle 55 am Ende des Planetendifferentiales 4. Dabei sind diese Einzelaggregate in der Reihenfolge 2, 1, 51, 52, 53, 54, 3 (mit 4 und 5, 6 nebeneinander hinter 4) und 55 in Linie hintereinander angeordnet und jeweils aggregatmäßig aneinander angrenzend zusammengebaut. Im Fall von Fig. 5 ist dieses Gesamt-Antriebsaggregat quer im Heck des Omnibus nahe von dessen Heckwand 105 eingebaut. Im Fall gemäß Fig. 6 dagegen ist dieses Gesamt-Antriebsaggregat längs im Omnibus nahe von dessen linker Seitenwand 101 eingebaut. Auch in diesen beiden Fällen muß das Kühler/Lüfter-Aggregat 2 nicht notwendigerweise in Linie mit und vor der Brennkraftmaschine 1 angeordnet sein, sondern kann auch getrennt von dieser an anderer geeigneter Stelle angeordnet sein.

Diese extrem kurzbauende, kompakte Anordnung der einzelnen Aggregate der Antriebseinrichtung in Linie hintereinander wird erst durch das Vorsehen eines Seitenabtriebes 11 erzielt, der in spezieller Weise an das Leistungsverzweigungsgetriebe 3 angeschlossen ist und über zwei Abtriebswellen 9, 10 verfügt. Der Seitenabtrieb 11 kann ein eigenes Gehäuse 12 aufweisen und mit diesem seitlich am vorderen Bereich des Gehäuses 13 nahe der Anschlußebene 37 des Planetendifferentials 4 angeflanscht oder in ein im vorderen Bereich entsprechend seitlich erweitertes Gehäuse 13 des Planetendifferentials 4 integriert sein. Die Hinterachse 7 des Omnibus ist mit ihrem Verteilergetriebe 7/1 über einen Achsantriebsstrang 8, bestehend aus einem Gelenk 8/1, Wellenteilen 8/2, 8/3 und Gelenk 8/4 an einer der beiden Abtriebswellen 9, 10 des Seitenabtriebes 11 angeschlossen. Das die Krafteinleitstelle bildende Verteilergetriebe 7/1 ist dabei außermittig, das heißt, neben der mit 56 bezeichneten Längsmittelachse des Omnibus an der Hinterachse 7 gegeben.

Im Fall eines Quereinbaues des kompakten Gesamt-Antriebsaggregates (siehe Fig. 1 und 5) ist die Hinterachse 7 des Omnibus über den Achsantriebsstrang 8 an der zweiten Abtriebswelle 10 des Seitenabtriebes 11 angeschlossen. Im Fall eines Längseinbaues des Gesamt-Antriebsaggregates dagegen (wie aus Fig. 3 und 6 ersichtlich) ist die Hinterachse 7 über den Achsantriebsstrang 8 an der ersten Abtriebswelle 9 des Seitenabtriebes 11 angeschlossen. Die Lage der jeweiligen Abtriebswelle 9 bzw. 10 des Seitenabtriebes 11 ist nach Einbau des Gesamt-Antriebsaggregates grundsätzlich immer so in Bezug auf das an der Hinterachse 7 gegebene Verteilergetriebe 7/1, daß der Achsantriebsstrang 8 außermittig und annähernd parallel zur Längsmittelachse 56 im Omnibus verläuft.

Nachstehend ist auf getriebliche Details näher eingegangen.

Das in der Zeichnung dargestellte und wegen seines erwiesenermaßen günstigen Wirkungsgrades bevorzugt verwendete hydrostatisch-mechanische Leistungsverzweigungsgetriebe 3 hat eine erste (Eingangs-)Hauptwelle 14, die in Wirkverbindung mit der Brennkraftmaschine 1 und/oder der Elektromaschine 52 steht und ein Teil des Planetendifferentials 4 bildet. Letzteres umfaßt ferner eine koaxial zur (Eingangs-)Hauptwelle 14 angeordnete und als Hohlwelle ausgebildete zweite Welle 15, eine Nebenwelle 16, an der die Hydromaschine 5 mit ihrer Welle angeschlossen ist, eine weitere Nebenwelle 17, an der die Hydromaschine 6 mit ihrer Welle angeschlossen ist, und eine (Ausgangs-)Hauptwelle 18. Ferner umfaßt das den mechanischen Teil des Leistungsverzweigungsgetriebes 3 bildende Planetendifferential 4 ein fest mit der (Eingangs-)Hauptwelle 14 verbundenes großes Sonnenrad 19, ein fest an der zweiten Welle 15 angeordnetes kleines Sonnenrad 20, zwei Reihen Planetenräder 21, 22, einen mit der (Ausgangs-)Hauptwelle 18 fest verbundenen und die Planetenräder 21, 22 lagernden Steg 23, ein Zahnrad 24 fest an letzterem, und ein Hohlrad 25. Letzteres hat eine Innenverzahnung 26, mit der die Planetenräder 22 kämmen, und eine Außenverzahnung 27, mit der ein Zahnrad 28 kämmt, das fest auf der Nebenwelle 16 sitzt und so die Antriebsverbindung zwischen Hydromaschine 5 und Planetendifferential 4 herstellt. Die Hydromaschine 5 ist ebenso wie die Hydromaschine 6 in beiden Drehrichtungen als Motor oder Pumpe betreibbar und mit letzterer über hydraulische Druckleitungen 29, 30 unter Zwischenschaltung eines Steuerblockes 31 verbunden. Auf der zweiten Welle 15 sitzt außer dem kleinen Sonnenrad 20 noch fest ein Zahnrad 32, mit dem ein drehbar, aber axial gesichert auf der Nebenwelle 17 gelagertes Zahnrad 33 kämmt. Außerdem ist auf der Nebenwelle 17 ein weiteres Zahnrad 34 drehbar, aber axial gesichert angeordnet, das mit dem Zahnrad 24 am Steg 23 in Eingriff steht. Mit 35 ist ein drehfest, aber axial auf der Nebenwelle 17 verschiebbares Schaltorgan einer Wechselschaltkupplung WSK bezeichnet, mit dem nach Verschiebung aus neutraler 0-Stellung in der einen Schaltstellung a das Zahnrad 34, in der anderen Schaltstellung c dagegen das andere Zahnrad 33 drehfest mit der Nebenwelle 17 gekuppelt werden kann. In der zwischen beiden Schaltstellungen a, c liegenden 0-Stellung ist keines der beiden Zahnräder 33, 34 mit der Nebenwelle 17 verbunden.

An der (Ausgangs-)Hauptwelle 18 war bei bislang bekannten Lösungen der Achsantriebsstrang 8 angeschlossen. Im vorliegenden erfindungsgemäßen Fall bleibt dieser Ausgang des Leistungsverzweigungsgetriebes 3 jedoch ungenutzt. Die vom Getriebe 3 abzugebende Leistung wird intern des Planetendifferentials 4 von der (Ausgangs-)Hauptwelle 18 zum Seitenabtrieb 11 transferiert und dort in den angeschlossenen Achsantriebsstrang 8 eingeleitet. Die diesbezügliche Kraftübertragung erfolgt dabei über den Steg 23, das daran angeschlossene Zahnrad 24 und das mit diesem kämmende Zahnrad 34 zum Zahnrad 36, das innerhalb des Gehäuses 12 des Seitenabtriebes 11 drehfest auf dessen erster Ausgangswelle 9 sitzt. Die Stelle der Krafteinleitung in den Seitenabtrieb 11 liegt dabei vorzugsweise nahe der Ebene 37, mit der das Gehäuse 13 des Planetendifferentials 4 des Leistungsverzweigungsgetriebes 3 an der Brennkraftmaschine 1 bzw. am Gehäuse einer sich an letzterer anschließenden Kupplung 50 bzw. 54 bzw. eines Schwungrades 53 angeflanscht ist. Die erste Abtriebswelle 9 des Nebenabtriebes 11 verläuft parallel zu den Wellen 14, 15, 16, 17, 18 des Planetendifferentiales 4. Die zweite Abtriebswelle 10 des Seitenabtriebes 11 steht senkrecht zur ersten Abtriebswelle 9 und ist an letzterer über ein aus zwei Zahnrädern 38, 39 bestehendes Winkelgetriebe angeschlossen.

Die Drehzahl der Ausgangswelle 18 des Leistungsverzweigungsgetriebes 3 und damit, wegen der getrieblichen Verbindung auch jene der Abtriebswellen 9 bzw. 10 des Seitenabtriebes 11, sumiert bzw. sumieren sich aus den Drehzahlen des großen Sonnenrades 19 und des Hohlrades 25, welche die Umfangsgeschwindigkeit der Planetenräder 21, 22 bzw. des Steges 23 festlegen. Die Hydromaschine 5 bewirkt durch ihre Drehzahl und Drehrichtung über die Verzahnung 27, 28 die Drehzahl und Drehrichtung des Hohlrades 25.

Dabei ergibt sich für das Leistungsverzweigungsgetriebe 3 folgende Wirkung.

Für den Fall, daß der Omnibus aus dem Stand oder aus Langsam-bzw. Kriechgangfahrt heraus beschleunigt werden soll, arbeitet die Hydromaschine 5 in einem ersten Betriebsbereich des Leistungsverzweigungsgetriebes 3 (n_{Ausgang 18} : n_{Eingang 14} kleiner/gleich 50%) bei einer Drehrichtung des Hohlrades 25 umgekehrt zur Drehrichtung des großen Sonnenrades 19 als Pumpe und liefert die umgesetzte Leistung über die Druckleitungen 29, 30 an die Hydromaschine 6. Diese arbeitet in diesem Fall als Motor und treibt die Nebenwelle 17 an. Das Schaltorgan 35 der Wechselschaltkupplung WSK befindet sich dabei in Schaltstellung a, in der das Zahnrad 34 mit der Nebenwelle 17 gekuppelt und damit Leistung auf die (Ausgangs-) Hauptwelle 18 und von dieser über den Steg 23 sowie den Getriebezug 24, 34, 36; 38, 39 auf die Abtriebswellen 9 bzw. 10 des Seitenabtriebes 11 übertragbar ist. Mit größer werdender Drehzahl der (Ausgangs-)Hauptwelle 18 bzw. der Abtriebswellen 9, 10 des Seitenabtriebes 11 ergibt sich ein Betriebspunkt, bei dem die Hydromaschine 5 zumindest annähernd stillsteht und die in das Leistungsverzweigungsgetriebe 3 eingespeiste Antriebsleistung praktisch rein mechanisch vom Planetendifferential 4 übertragen wird. In dieser Situation erfolgt, sofern der Omnibus weiter beschleunigt werden soll, der Übergang in einen zweiten Betriebsbereich des Leistungsverzweigungsgetriebes 3 (n_{Ausgang 18}:n_{Eingang 14} größer/gleich 50 %) durch Umschaltung des Schaltorgans 35 der Wechselschaltkupplung WSK in Schaltposition c, worauf die Hydromaschine 6 dann über die Nebenwelle 17, das daran angekoppelte Zahnrad 33 und das mit diesem kämmende Zahnrad 32 mit der zweiten, das kleine Sonnenrad 20 tragenden Welle 15 antriebsmäßig verbunden ist.

Die Hydromaschine 5 arbeitet in diesem zweiten Betriebsbereich, bei gleicher Drehrichtung des Hohlrades 25 und des großen Sonnenrades 19 wie vorher, als Motor, der seine Antriebsleistung von der jetzt als Pumpe arbeitenden Hydromaschine 6 über die Druckleitungen 29, 30 zugeführt bekommt.

Die Hydromaschine 6 hält demnach ihre Antriebsleistung von der (Eingangs-)Hauptwelle 14 her über das große Sonnenrad 19, die miteinander satzweise (21, 22) verbundenen Planetenräder 21, 22, das kleine Sonnenrad 20 und die Welle 15, den geschlossenen Getriebezug 32, 33 und die Nebenwelle 17 zugeführt.

Die dem Leistungsverzweigungsgetriebe 3 zugeführte Antriebsleistung wird von der Brennkraftmaschine 1 und/oder der Elektromaschine 52 an die (Eingangs-)Hauptwelle 14 abgegeben.

Im Fall der Ausführungsbeispiele gemäß Fig. 5 bis 8 ist das Schwungrad 53 mittels der Kupplung 54 an die Welle 15 des Planetendifferentials 4 ankuppelbar, so daß beim Bremsen des Omnibus vom Achsantriebsstrang 8 her über das Leistungsverzweigungsgetriebe 3 Bremsleistung in das Schwungrad 53 eingeleitet werden kann. Diese Speicherleistung ist vom Schwungrad 53 bei Bedarf, z.B. beim Anfahren und Beschleunigen des Omnibus, über das Leistungsverzweigungsgetriebe 3 wieder an den Achsantriebsstrang 8 rückleitbar. Ebenso ist es möglich, das Schwungrad 53 bei geschlossener Kupplung 54 und offener Kupplung 51 im Stillstand des Omnibus über das Leistungsverzweigungsgetriebe 3 von der dann als Motor betriebenen und ihre Leistung aus einem nicht dargestellten elektrischen Speicher beziehenden Elektromaschine 52 aufzuladen. Bei geschlossener Kupplung 51 kann dieser Ladevorgang auch von der Brennkraftmaschine 1 unterstützt werden. Darüber hinaus ist es auch möglich, die Elektromaschine 52 als Motor wirkend zusammen mit dem aufgeladenen Schwungrad 53 als Energielieferanten für ein Anfahren und Beschleunigen des Omnibus heranzuziehen, in welchem Fall dann die Kupplung 51 geöffnet und die Kupplung 54 geschlossen wäre. Falls beim Bremsen des Omnibus mehr als die zum Laden des Schwungrades 53 notwendige Energie anfällt, dann kann diese überschüssige Bremsenergie auch zum Laden des Elektrospeicher über die dann als Generator betriebene Elektromaschine 52 (bei offenen Kupplungen 51, 54) erfolgen. In all diesen Fällen wird das Leistungsverzweigungsgetriebe 3 von einer nicht dargestellten Steuerelektronik aus entsprechend geregelt und eingestellt, welche Steuerelektronik auch die Betriebsweise der Elektromaschine 52 sowie die Betätigung der Kupplungen 51, 54, gegebenenfalls auch den Betrieb der Brennkraftmaschine 1 steuert.

Wegen der Kompaktheit des Gesamt-Antriebsaggregates bietet sich außerdem die Möglichkeit, am hinteren Ende desselben eine Nebenabtriebsstelle 55 vorzusehen, von der aus ein oder mehrere Nebenaggregate des Omnibus, wie Pumpen, Kompressoren und dergleichen antreibbar sind (siehe Fig. 5 bis 8).

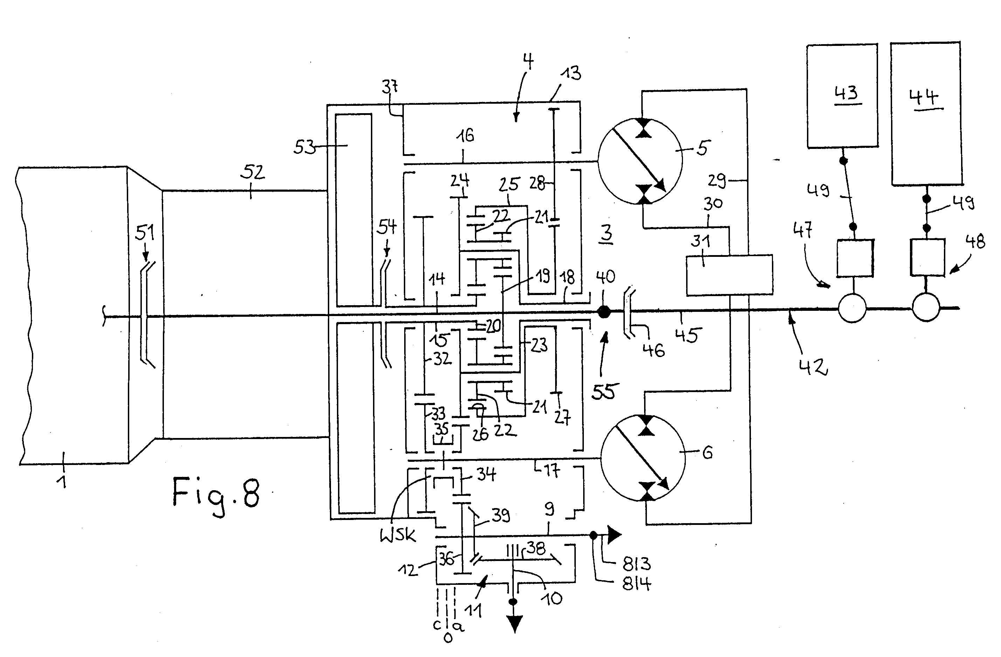

Diese Nebenabtriebsstelle 55 ist - wie aus Fig. 7 und 8 ersichtlich - dadurch realisiert, daß die als Abtrieb ungenutzte (Ausgangs-)Hauptwelle 18 des Leistungsverzweigungsgetriebes 3 als Hohlwelle ausgebildet ist, durch die die koaxial hierzu fluchtende (Eingangs-)Hauptwelle 14 hindurch verlängert ist.

Am äußeren, außerhalb des Gehäuses 13 des Planetendifferentials 4 gegebenen freien Ende weist diese verlängerte (Eingangs-)Hauptwelle 14 ein Anschlußorgan 40 auf, bei dem es sich um einen Flansch, eine Kupplung, ein Gelenk oder dergleichen handeln kann.

An diesem Anschlußorgan 40 kann entweder (wie im Fall gemäß Fig. 5, 6 und 7) ein Nebenaggregat 41, insbesondere eine Pumpe, direkt mit seiner bzw. ihrer Welle, oder aber (wie aus Fig. 8 ersichtlich) ein Triebstrang 42 für den Antrieb mehrerer Nebenaggregate 43, 44 angeschlossen sein. Dieser Triebstrang 42 besteht beispielsweise aus einer Welle 45 mit einer schaltbaren, bei Bedarf die Kraftübertragung unterbrechenden Kupplung 46 und angeschlossenen Getrieben 47, 48, an deren Abtrieben über Wellenverbindungen 49 die anzutreibenden Nebenaggregate 43 bzw. 44 angeschlossen sind. Auf diese Weise ist eine variable, zweckmäßige Anordnung bzw. Unterbringung der Nebenaggregate 43, 44 neben, über bzw. hinter dem Gesamt-Antriebsaggregat im Omnibus sowie eine kraftflußmäßig günstige Anbindung derselben an die Antriebseinrichtung realisierbar.

Aus den zeichnerischen Darstellungen der Fig. 1, 3, 5 und 6 ergeben sich die Proportionen des Gesamt-Antriebsaggregates in Bezug auf die weiteren maß- und formseitigen Gegebenheiten des Omnibusses. Dabei ist erkennbar, daß aufgrund der erfindungsgemäßen Ausgestaltung des Gesamt-Antriebsaggregates ein erheblicher Raumgewinn im Heck des Omnibus erzielbar ist. Dieser freigewordene Raum ist nun anderweitig nutzbar, was insbesondere in Niederfluromnibussen sehr vorteilhaft ist, denn dort behindert die Antriebseinrichtung nun nicht mehr in dem Maße wie bisher die Gestaltung des Hecktür-Eingangsbereiches 103 mit seiner bodenseitig entsprechend tief liegenden Trittfläche 104.

## Patentansprüche

1. Antriebseinrichtung in einem Omnibus mit einem Antriebsaggregat, bei dem wenigstens ein Antriebsmotor (1, 52) mit Kühler-/Lüfter-Aggregat (2), Kupplung(en) (51, 54), Getriebe (3) in einer Linie hintereinander angeordnet sind, welches Antriebsaggregat eine solch begrenzte Baulänge hat, daß es im Heck des Omnibus der Quere nach oder sich längs einer Seitenwand (101) erstreckend einbaubar ist, wobei der zur Hinterachse (7, 7/1) führende Achsantriebsstrang (8) außermittig und annähernd parallel zur Längsmittelachse (56) des Omnibus verläuft und an der Abtriebswelle (9 bzw. 10) eines seitlich am Getriebe angeordneten Seitenabtriebes (11) angeschlossen ist, wobei die Abtriebswelle (9 bzw. 10) über einen Getriebezug (24, 34, 36) mit einer Welle des Getriebes verbunden ist, dadurch gekennzeichnet,
- daß das Getriebe (3) durch ein hydrostatisch-mechanisches Leistungsverzweigungsgetriebe gebildet ist, mit mindestens zwei Reihen von Planetenrädern (21, 22), zwei Sonnenrädern (19, 20), einem Steg (23) und einem Hohlrad (25), ferner mit zwei den Eingang bzw. Ausgang bildende und jeweils an verschiedene Wellen des Planetendifferentials (4) angeschlossenen Hauptwellen (14, 18), und mit mindestens zwei Hydromaschinen (5, 6), die jeweils in mindestens einem Betriebsbereich an einer eigenen Welle des Planetendifferentials (4) angeschlossen sind und wechselweise als Pumpe oder Motor arbeiten, wobei mindestens eine (6) der Hydromaschinen (5, 6) bei zumindest annähernd stillstehender anderer Hydromaschine (5) beim Übergang vom einen in den anderen Betriebsbereich mittels wenigstens einer schaltbaren Kupplung (35, WSK) von der Ausgangs-Hauptwelle (18) zum nichtantriebsseitigen Sonnenrad (20) umschaltbar ist und im Zugbetrieb von Motor- auf Pumpenfunktion wechselt,
- daß ferner der Seitenabtrieb (11) zwei über ein Winkelgetriebe (38, 39) verbundene, synchron angetriebene Abtriebswellen (9, 10) aufweist, wobei an einer derselben je nach Einbau des Antriebsaggregates - quer oder längs - der zur Hinterachse (7, 7/1) führende Achsantriebsstrang (8) angeschlossen ist, und
- daß im Seitenabtrieb (11) auf einer der Abtriebswellen (9, 10) ein Zahnrad (36) drehfest sitzt, auf welches die Antriebskraft von der Ausgangs-Hauptwelle (18) des Leistungsverzweigungsgetriebes (3) her indirekt über den an einer Welle (23) des Planetendifferentials (4) angeschlossenen Getriebezug (24, 34) übertragen wird.

2. Antriebseinrichtung nach Anspruch 1, dadurch gekennzeichnet,
- daß die erste Abtriebswelle (9) des Seitenabtriebes (11) parallel zu den Wellen (14, 15, 16, 17, 18) des Planetendifferentials (4) verläuft und an dieser Abtriebswelle (9) der Achsantriebsstrang (8) bei längs einer Seitenwand (101) des Omnibus verlaufend eingebautem Antriebsaggregat angeschlossen ist, und
- daß die zweite Abtriebswelle (10) im Seitenabtrieb (11) senkrecht zur ersten Abtriebswelle (9) angeordnet und an letzterer getrieblich über das Winkelgetriebe (38, 39) angeschlossen ist, und daß an dieser zweiten Abtriebswelle (10) der Achsantriebsstrang (8) dann angeschlossen ist, wenn das Gesamt-Antriebsaggregat quer im Heck des Omnibus eingebaut ist.

3. Antriebseinrichtung nach einem der vorhergehenden Ansprüche, dadurch gekennzeichnet,daß das die Krafteinleitstelle in den Seitenabtrieb (11) bildende Zahnrad (36) drehfest auf der ersten Abtriebswelle (9) sitzt.

4. Antriebseinrichtung nach Anspruch 4, dadurch gekennzeichnet, daß das die Krafteinleitstelle in den Seitenabtrieb (11) bildende Zahnrad (36) nahe jener Ebene angeordnet ist, in der das Planetendifferential (4) des Leistungsverzweigungsgetriebes (3) an der Brennkraftmaschine (1) bzw. am Gehäuse einer sich an letzterer anschließenden Kupplung (54) bzw. eines Schwungrades (53) angeflanscht ist.

5. Antriebseinrichtung nach einem der vorhergehenden Ansprüche, dadurch gekennzeichnet,daß der Getriebezug (24, 34) aus zwei miteinander kämmenden Zahnrädern besteht, von denen das eine (34) mit dem Zahnrad (36) des Seitenabtriebes (11) kämmt und das andere (24) mit dem Steg (23) des Planetendifferentials (4) verbunden ist, der wiederum an der Ausgangs-Hauptwelle (18) des Leistungsverzweigungsgetriebes (3) angeschlossen ist und so deren Abtriebsleistung indirekt auf den Getriebezug (24, 34) überträgt.

6. Antriebseinrichtung nach Anspruch 1, dadurch gekennzeichnet, daß die Ausgangs-Hauptwelle (18) des Leistungsverzweigungsgetriebes (3) als Hohlwelle ausgebildet und die koaxial hierzu fluchtende Eingangs-Hauptwelle (14) durch diese hohle Ausgangs-Hauptwelle (18) hindurch verlängert ist, und daß am äußeren freien Ende der verlängerten Eingangs-Hauptwelle (14) ein Nebenaggregat (41), z.B. eine Pumpe oder ein Triebstrang (42) für den Antrieb mehrerer Nebenaggregate (43, 44) angekoppelt ist.

7. Antriebseinrichtung nach Anspruch 6, dadurch gekennzeichnet, daß die durch die Ausgangs-Hauptwelle (18) hindurch verlängerte Eingangs-Hauptwelle (14) außerhalb des Gehäuses (13) des Planetendifferentials (4) ein Anschlußorgan (39), z.B. einen Flansch, eine Kupplung, ein Gelenk oder dergleichen trägt, an welchem das Nebenaggregat (41) bzw. der Triebstrang (42) für den Antrieb der Nebenaggregate (43, 44) mit entsprechend ausgebildetem Anschlußorgan ankuppelbar ist.

## Claims

1. A drive device in a bus with a drive assembly, wherein at least one drive motor (1, 52) with a cooler/ventilator assembly (2), coupling(s) (51, 54) and gearing (3) are arranged in a line behind one another, the said drive assembly having a limited constructional length, so that it can be built in at the rear of the bus to extend transversely or along a side wall (101), wherein the axle drive line (8) leading to the rear axle (7, 7/1) extends eccentrically and substantially parallel to the longitudinal central axis (56) of the bus, and is connected to the driven shaft (9 or 10) of a lateral power take off (11) arranged laterally on the gearing, the driven shaft (9 or 10) being connected via a gear train (24, 34, 36) to a shaft of the gearing, **characterised in that**
- the gearing (3) is formed by hydraulic-mechanical torque division gearing, with at least two rows of planet wheels (21, 22), two sun gears (19, 20), a cage (23) and an annular gear (25), and additionally with two main shafts (14, 18) forming the input or output, and each connected to different shafts of the planetary differential (4), and with at least two hydraulic machines (5, 6), each connected in at least one operational phase to a separate shaft of the planetary differential (4) and alternately functioning as a pump or as a motor, at least one (6) of the hydraulic machines (5, 6), when the other hydraulic machine (5) is at least substantially at rest, upon transition from one operational phase to another, being reversible by means of at least one switchable coupling (35, WSK) from the main output shaft (18) to the non-driven sun gear (20), and alternating from motor to pump function during pulling operation,
- additionally, the lateral power take off (11) has two synchronously operated driven shafts (9, 10) connected via a bevel gear (38, 39), the axle drive line (8) leading to the rear axle (7, 7/1) being connected to one of the said shafts, according to the manner in which the drive assembly has been built in - transversely or longitudinally, and
- a gear wheel (36) is positioned in a rotationally rigid manner on one of the driven shafts (9, 10) in the lateral power take off (11), to which gear wheel the drive power from the main output shaft (18) of the torque division gearing (3) is indirectly transmitted via the gear train (24, 34) connected to a shaft (23) of the planetary differential (4).

2. A drive device in accordance with claim 1, **characterised in that**
- the first driven shaft (9) of the lateral power take off (11) extends parallel to the shafts (14, 15, 16, 17, 18) of the planetary differential (4) and the axle drive line (8) is connected to the said driven shaft (9), when the drive assembly is built in along a side wall (101) of the bus, and
- the second driven shaft (10) is arranged in the lateral power take off (11) vertically to the first driven shaft (9) and is connected in a geared manner to the latter via the bevel gear (38, 39) and the axle drive line (8) is connected to the said second driven shaft (10), when the total drive assembly has been built transversely into the rear of the bus.

3. A drive device in accordance with one of the preceding claims, **characterised in that** the gear wheel (36) forming the point of transmission of force into the lateral power take off (11) is positioned in a rotationally rigid manner on the first driven shaft (9).

4. A drive device in accordance with claim 4 [*sic*], **characterised in that** the gear wheel (36) forming the point of transmission of force into the lateral power take off (11) is arranged in the vicinity of that plane in which the planetary differential (4) of the torque division gearing (3) is flanged to the internal combustion engine (1), or to the casing of a coupling (54) connected to the latter, or to a flywheel (53).

5. A drive device in accordance with one of the preceding claims, **characterised in that** the gear train (24, 34) comprises two gear wheels meshing with one another, one (34) meshing with the gear wheel (36) in the lateral power take off (11) and the other (24) being connected to the cage (23) of the planetary differential (4) which, however, is connected to the main output shaft (18) of the torque division gearing (3) and thus transfers the driven power therefrom indirectly to the gear train (24, 34).

6. A drive device in accordance with claim 1, **characterised in that** the main output shaft (18) of the torque division gearing (3) is formed as a hollow shaft, and the main input shaft (14), aligned coaxially therewith, extends through the said hollow main output shaft (18), and a subsidiary assembly (41), for example a pump or a drive line (42) for drive of a plurality of subsidiary assemblies (43, 44) is coupled to the external free end of the extended main input shaft (14).

7. A drive device in accordance with claim 6, **characterised in that** the main input shaft (14) extending through the main output shaft (18) supports a connecting body (39) [*sic*] outside the casing (13) of the planetary differential (4), for example a flange, a coupling, a joint or the like, to which there can be coupled the subsidiary assembly (41) or the drive line (42) for drive of the subsidiary assemblies (43, 44), with a correspondingly formed connecting body.

## Revendications

1. Installation d'entraînement pour un autocar, comprenant un groupe d'entraînement formé d'au moins un moteur (1, 52) avec son ensemble radiateur/ventilateur (2), un ou des embrayages (51, 54), une transmission (3), placés en ligne l'un derrière l'autre, ce groupe d'entraînement ayant une longueur limitée telle qu'il puisse être placé à l'arrière de l'autocar, transversalement, ou longitudinalement le long d'une paroi latérale 101, la ligne de transmission d'essieu (8) conduisant à l'essieu arrière (7, 7/1) étant décentrée de manière pratiquement parallèle à l'axe longitudinal (56) de l'autocar, et l'arbre de sortie (9, 10) étant relié à une sortie latérale (11) prévue sur le côté de la transmission, l'arbre de sortie (9, 10) étant relié par une ligne de transmission (24, 34, 36) à un arbre de la transmission,
caractérisée en ce que :
- la transmission (3) est formée par une transmission de dérivation de puissance mécano-hydrostatique avec au moins deux rangées de roues planétaires (21, 22), deux roues solaires (19, 20), une entretoise (23) et une roue creuse (25) ainsi que deux arbres principaux (14, 18) formant l'entrée ou la sortie en étant reliés à des arbres respectifs du différentiel planétaire (4), et au moins deux machines hydrauliques (5, 6) reliées chaque fois, dans au moins une plage de fonctionnement, à un arbre propre du différentiel planétaire (4), et fonctionnant alternativement comme pompe ou comme moteur, au moins l'une (6) des machines hydrauliques (5, 6), lorsque l'autre machine hydraulique (5) est pratiquement arrêtée, lors du passage d'une plage de fonctionnement à l'autre, est commutée par au moins un embrayage commutable (35, WSK) de l'arbre principal (18) de sortie vers la roue solaire (20) non située du côté de l'entraînement et, pour le fonctionnement en traction, passe du fonctionnement en moteur au fonctionnement en pompe,
- en ce qu'en outre la sortie latérale (11) comprend deux arbres de sortie (9, 10) synchrones reliés par une transmission d'angle (38, 39), et, suivant le montage transversal ou longitudinal du groupe d'entraînement, l'un de ces arbres est relié à la ligne de transmission d'essieu (8) conduisant à l'essieu arrière (7, 7/1),
- et dans la sortie latérale (11) une roue dentée (36) est solidaire en rotation de l'un des arbres de sortie (9, 10), roue qui transmet la force motrice de l'arbre principal de sortie (18) de la transmission de dérivation de puissance (3), indirectement par la ligne de transmission (24, 34) reliée à un arbre (23) du différentiel planétaire (4).

2. Installation d'entraînement selon la revendication 1, caractérisée en ce que :
- le premier arbre de sortie (9) de la sortie latérale (11) est parallèle aux arbres (14, 15, 16, 17, 18) du différentiel planétaire (4) et la ligne de transmission d'essieu (8) est reliée à cet arbre de sortie (9) alors que le groupe d'entraînement est monté le long de la paroi latérale (101) de l'autocar, et
- le second arbre de sortie (10) de la sortie latérale (11) est perpendiculaire au premier arbre de sortie (il) et relié à ce dernier par la transmission d'angle (38, 39), et la ligne de transmission d'essieu (8) est reliée à ce second arbre de sortie (10) lorsque le groupe d'entraînement principal est monté transversalement dans l'arrière de l'autocar.

3. Installation d'entraînement selon l'une des revendications précédentes, caractérisé en ce que la roue dentée (36) qui constitue le point d'entrée des forces dans la sortie latérale (11), est montée solidairement en rotation sur le premier arbre de sortie (9).

4. Installation d'entraînement selon la revendication 3, caractérisée en ce que le pignon denté (36) qui constitue le point d'entrée des forces dans la sortie latérale (11) est situé à proximité du plan au niveau duquel le différentiel planétaire (4) de la transmission de dérivation de puissance (3) est bridé sur le moteur à combustion interne (1) ou sur le boîtier d'un embrayage (54) ou d'un volant d'inertie (53) relié au moteur.

5. Installation d'entraînement selon l'une des revendications précédentes, caractérisée en ce que la ligne de transmission (24, 34) se compose de deux roues dentées s'engrenant, dont l'une (34) engrène avec la roue dentée (36) de la sortie latérale (11) et l'autre (24) est reliée à l'entretoise (23) du différentiel planétaire (4) elle-même reliée à l'arbre de sortie (18) de la transmission de dérivation de puissance (3) transmettant ainsi sa puissance indirectement à la ligne de transmission (24, 34).

6. Installation d'entraînement selon la revendication 1, caractérisée en ce que l'arbre principal de sortie (18) de la transmission de dérivation de puissance (3) est un arbre creux, et l'arbre principal d'entrée (14), coaxial au précédent, traverse l'arbre principal creux (18) de sortie, et à son extrémité extérieure libre, l'arbre principal d'entrée (14), prolongé, est relié à un ensemble auxiliaire (41) tel que par exemple une pompe ou une ligne de transmission (42) pour l'entraînement de plusieurs ensembles auxiliaires (43, 44).

7. Installation d'entraînement selon la revendication 6, caractérisée en ce que l'arbre principal d'entrée (14), prolongé à travers l'arbre principal de sortie (18), porte, à l'extérieur du boîtier (13) du différentiel planétaire (4), un organe de raccordement (39) tel que par exemple une bride, un embrayage, une articulation ou autre moyen analogue auquel est relié l'élément auxiliaire (41) ou la ligne de transmission (42) pour entraîner les éléments auxiliaires (43, 44) par un organe de raccordement de forme appropriée.
